# EUROPEAN PATENT SPECIFICATION

(11) **EP 3 402 256 B1**
(45) Date of publication and mention of the grant of the patent: **15.07.2020**
(21) Application number: 16891304.4
(22) Date of filing: 28.12.2016
(51) Int. Cl.: H04W 52/02, H04W 84/12

(54) **COMMUNICATION METHOD AND APPARATUS FOR WIRELESS LOCAL AREA NETWORK**
KOMMUNIKATIONSVERFAHREN UND -VORRICHTUNG FÜR EIN DRAHTLOSES LOKALES NETZWERK
PROCÉDÉ ET APPAREIL DE COMMUNICATION POUR RÉSEAU LOCAL SANS FIL

(30) Priority: 26.02.2016 CN 201610109833
(43) Date of publication of application: 14.11.2018
(73) Proprietor: Huawei Technologies Co., Ltd., Longgang District Shenzhen, Guangdong 518129 (CN)
(72) Inventor: GUO, Yuchen, Shenzhen Guangdong 518129 (CN); YANG, Xun, Shenzhen Guangdong 518129 (CN); YU, Jian, Shenzhen Guangdong 518129 (CN); LIN, Meilu, Shenzhen Guangdong 518129 (CN)
(74) Representative: Epping - Hermann - Fischer
(86) International application number: PCT/CN2016/112605
(87) International publication number: WO 2017/143856

(56) References cited:
- WO-A1-2015/099965
- CN-A- 104 247 337
- CN-A- 104 756 560
- CN-A- 105 265 001
- US-A1- 2014 112 226
- Alfred Asterjadhi Asterjadhi ET AL: "Scheduled Trigger frames - Follow up", , 8 November 2015 (2015-11-08), XP055379675, IEEE Mentor Public Documentation Portal Retrieved from the Internet: URL:https://mentor.ieee.org/802.11/dcn/15/ 11-15-1319-00-00ax-scheduled-trigger-frame s-follow-up.pptx [retrieved on 2017-06-08]

## Description

### TECHNICAL FIELD

This application relates to the communications field, and in particular, to a communication method used in a wireless local area network, and an apparatus in the communications field.

### BACKGROUND

To improve energy-saving efficiency of a node in a wireless local area network, a target wake time (TWT) mechanism is introduced into the 802.11ah standard. In the TWT mechanism, a station and an access point may agree on a wake time and may keep in an active state and communicate with each other (or perform data exchange) during the wake time, and the station may enter a sleep state at a time other than the wake time, thereby achieving an energy-saving objective. According to different methods for agreeing on a wake time, the TWT mechanism is classified into a broadcast TWT and a solicited TWT.

In a broadcast TWT, the access point broadcasts a TWT information element (IE) by using a beacon frame (Beacon Frame), and the TWT information element includes sending time information of a trigger frame, so that the station performs communication based on a sending time indicated by the TWT information element, and enters a sleep state at another time, thereby achieving an energy-saving objective. In the broadcast TWT, not all beacon frames include a TWT information element. Therefore, when the station in a sleep state wakes up and needs to upload data, a beacon frame received by the station may not include a TWT information element, and the station cannot learn of a sending time of a trigger frame. In this case, the station can only keep monitoring a channel until receiving a beacon frame including a TWT information element. This is disadvantageous for energy saving of the stations.

From the contribution "Scheduled Trigger frames - Follow up" (Alfred Asterjadhi Asterjadhi et al.; November 8, 2015; XP055379675; IEEE Mentor Public Documentation Portal) the use of triggered the use of a trigger in a TWT element is known. From US 2014/0112226 A1 the use of a TWT information element is known.

### SUMMARY

Communication methods, a station and an access point are provided by the independent claims. Dependent claims provide preferred embodiments. Embodiments of this application provide a communication method used in a wireless local area network, and an apparatus, so as to improve communication efficiency.

According to a first aspect, a communication method used in a wireless local area network is provided, including: receiving, by a station, a first beacon frame sent by an access point, where the first beacon frame includes first indication information, the first indication information is used to indicate a sending time of a second beacon frame, and the second beacon frame is a beacon frame including a target wake time TWT information element; and receiving, by the station, the second beacon frame based on the indication of the first indication information, wherein the first indication information comprises a quantity of beacon frame intervals between the first beacon frame and the second beacon frame.

The station first receives the first beacon frame, where the first indication information included in the first beacon frame is used to indicate the sending time of the second beacon frame including the TWT information element; and the station determines the sending time of the second beacon frame based on the indication of the first indication information, so that the station can receive, at an exact time, the second beacon frame including the TWT information element, thereby improving communication efficiency.

In a possible implementation, the first beacon frame further includes second indication information, and the second indication information is used to indicate a sending cycle of a beacon frame including a TWT information element.

In a possible implementation, the method further includes: determining, by the station based on an indication of the TWT information element in the second beacon frame, a target time at which the access point sends a trigger frame; and receiving, by the station, the trigger frame at the target time.

According to a second aspect, a communication method used in a wireless local area network is provided, including: sending, by an access point, a first beacon frame, where the first beacon frame includes first indication information, the first indication information is used to indicate a sending time of a second beacon frame, and the second beacon frame is a beacon frame including a target wake time TWT information element; and sending, by the access point, the second beacon frame, wherein the first indication information comprises a quantity of beacon frame intervals between the first beacon frame and the second beacon frame.

The access point first sends the first beacon frame, where the first indication information included in the first beacon frame is used to indicate the sending time of the second beacon frame including the TWT information element, so that the station determines the sending time of the second beacon frame based on the indication of the first indication information. In this way, the station can receive, at an exact time, the second beacon frame including the TWT information element, thereby improving communication efficiency.

In a possible implementation, the first beacon frame further includes second indication information, and the second indication information is used to indicate a sending cycle of a beacon frame including a TWT information element.

In a possible implementation, the method further includes: sending, by the access point, a trigger frame at a target time indicated by the TWT information element.

According to a third aspect, a station is provided, where the station includes a module configured to perform the method in the first aspect.

According to a fourth aspect, an access point is provided, where the access point includes a module configured to perform the method in the second aspect.

According to an fifth aspect, a station is provided, where the station includes a memory, a processor, and a transceiver. The memory is configured to store a program, the processor is configured to execute the program, and the transceiver is configured to communicate with another station. When the program is executed, the processor is configured to perform the method in the first aspect.

According to a sixth aspect, an access point is provided, where the access point includes a memory, a processor, and a transceiver. The memory is configured to store a program, the processor is configured to execute the program, and the transceiver is configured to communicate with another station. When the program is executed, the processor is configured to perform the method in the second aspect.

### BRIEF DESCRIPTION OF DRAWINGS

FIG 1 is a schematic diagram of a broadcast TWT in the prior art;
FIG. 2 is a schematic diagram of a beacon frame according to an example of this application;
FIG. 3 is a schematic diagram of a beacon frame according to another example of this application;
FIG. 4 is a schematic diagram of a communication method according to an example of this application;
FIG. 5 is a schematic diagram of a communication method according to another example of this application;
FIG 6 is a schematic diagram of a station according to another example of this application;
FIG. 7 is a schematic diagram of an access point according to another example of this application;
FIG 8 is a schematic diagram of a station according to another example of this application;
FIG 9 is a schematic diagram of an access point according to another example of this application;
FIG. 10 is a schematic diagram of a station according to another example of this application;
FIG. 11 is a schematic diagram of a station according to another example of this application;
FIG. 12 is a schematic diagram of an access point according to another example of this application;
FIG. 13 is a schematic diagram of a station according to another example of this application;
FIG. 14 is a schematic diagram of an access point according to another example of this application; and
FIG 15 is a schematic diagram of a station according to another example of this application.

### DESCRIPTION OF EXAMPLES

The following describes the technical solutions in the examples of this application with reference to the accompanying drawings in the examples of this application.

It should be understood that, the technical solutions in the examples of this application may be applied to various communications systems, such as: a Global System of Mobile Communications (GSM) system, a Code Division Multiple Access (CDMA) system, a Wideband Code Division Multiple Access (WCDMA) system, a general packet radio service (GPRS) system, a Long Term Evolution (LTE) system, an LTE frequency division duplex (FDD) system, an LTE time division duplex (TDD) system, a Universal Mobile Telecommunications System (UMTS), a Worldwide Interoperability for Microwave Access (WiMAX) communications system, or the like.

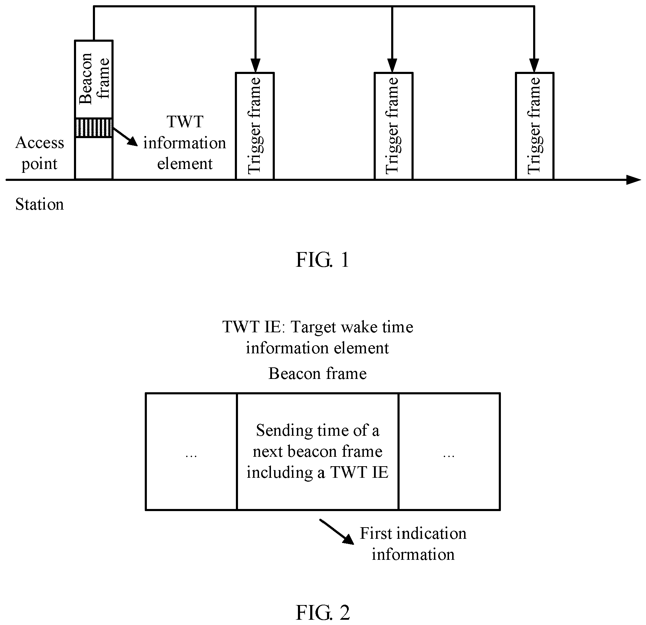

FIG. 1 shows a schematic diagram of a broadcast TWT in the prior art. As shown in FIG. 1, in a broadcast TWT, an access point directly broadcasts a TWT information element by using a beacon frame, and the TWT information element indicates that the access point sends a trigger frame (TF), so as to trigger a plurality of users to perform uplink transmission. The trigger frame may include resource allocation information, and the resource allocation information is used to trigger a plurality of users to perform transmission on a corresponding resource block. Alternatively, the trigger frame may be a trigger frame for random access (TFR), and the TFR may be used to trigger the plurality of users to perform random access in an orthogonal frequency division multiple access (OFDMA) mode. In the broadcast TWT, the TWT information element carried in the beacon frame sent by the access point includes information such as a sending time of the TF or TFR, so that a station wakes up at an exact time to perform communication and enters a sleep state at another time, thereby achieving a power-saving objective.

As described in the foregoing, in the broadcast TWT in the prior art, because not all beacon frames include a TWT information element, when the station wakes up from a sleep state and needs to upload data to the access point, the station needs to keep monitoring a channel until receiving a beacon frame including a TWT information element; in other words, the station may be in a sleep state until receiving a next beacon frame, but the next beacon frame may similarly not include a TWT information element. The station needs to repeat steps of entering a sleep state and waking up, until receiving a beacon frame including a TWT information element. This is disadvantageous for energy saving of the stations.

In view of the foregoing problem, the following solution is put forward in this example of this application: A beacon frame may include first indication information, and the first indication information may be used to indicate a sending time of the beacon frame including a TWT information element. For example, the first indication information may include a beacon frame interval between the current beacon frame and a next beacon frame that includes a TWT information element. Therefore, after receiving the beacon frame, a station may learn of an arrival time of the beacon frame including the TWT information element; in this case, the station may be in a sleep state until the beacon frame including the TWT information element arrives, and wakes up to receive the beacon frame, so that power consumption of the station is further reduced, thereby improving communication efficiency of the station.

The following describes a communication method 100 used in a wireless local area network in an example of this application, the method 100 may be performed by a station and an access point, and the method 100 includes the following described steps:
101. An access point sends a first beacon frame to a station, where the first beacon frame includes first indication information, the first indication information is used to indicate a sending time of a second beacon frame, and the second beacon frame is a beacon frame including a target wake time TWT information element.

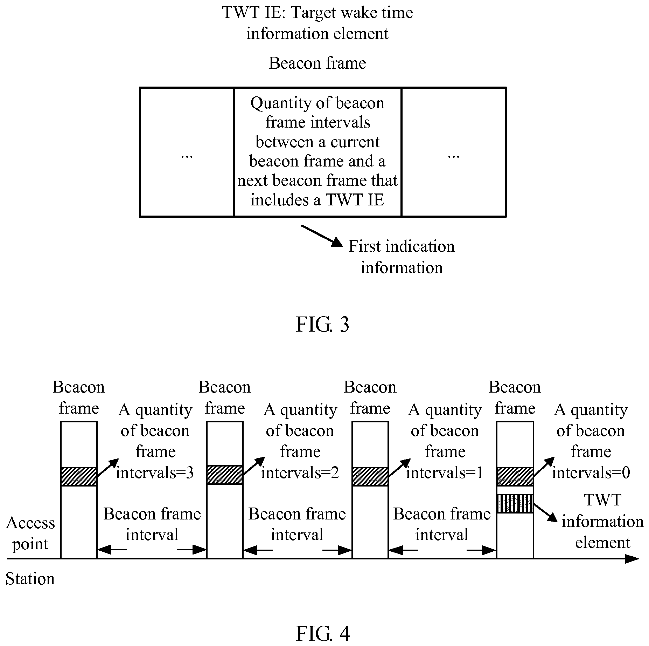

Optionally, FIG 2 shows a schematic diagram of a beacon frame according to an example of this application. As shown in FIG. 2, the first indication information indicates the sending time of the second beacon frame, and the sending time of the second beacon frame may be directly included in a subfield corresponding to the first indication information. In addition, FIG. 3 shows a schematic diagram of a beacon frame according to another example of this application. As shown in FIG. 3, the subfield corresponding to the first indication information may include a quantity of beacon frame intervals between the first beacon frame and the second beacon frame, and the station may determine the sending time of the second beacon frame based on the quantity of beacon frame intervals.

Optionally, a beacon frame including a TWT information element may be sent periodically. The first beacon frame may further include second indication information, and the second indication information is used to indicate a sending cycle of a beacon frame including a TWT information element. After determining the sending time of the second beacon frame and the sending cycle of a beacon frame including a TWT information element, the station may determine a sending time of a subsequent beacon frame including a TWT information element, so that the station can wake up at an exact time to receive the beacon frame including the TWT information element, thereby improving communication efficiency.

It should be understood that the first beacon frame may alternatively be a beacon frame including a TWT IE. When the first beacon frame includes a TWT IE, the first indication information may indicate a next beacon frame that includes a TWT IE and that is adjacent to the first beacon frame, or the first indication information may indicate the first beacon frame. Optionally, the first beacon frame may include a service identity, and the service identity may be used to indicate a service type corresponding to the first indication information. The service identity may alternatively be included in the first indication information. The station may determine, based on the service identity, the service type corresponding to the first indication information. It should be noted that the service type corresponding to the first indication information may be a service type of a service to which uplink data triggered by a trigger frame indicated by the target TWT information element belongs, and the target TWT information element is a TWT information element included in the second beacon frame indicated by the first beacon frame.

Optionally, the first beacon frame may include a plurality of TWT beacon frame indicator fields (TWT Beacon Count), and indication information in each indicator field is corresponding to a different service type. After receiving the first beacon frame, the station determines indication information in a corresponding indicator field as the first indication information based on a service type of a service to which the to-be-sent uplink data belongs; based on the indication information in the corresponding indicator field, the station receives the beacon frame including the TWT information element and enters a sleep state.

102. After receiving the first beacon frame, the station receives the second beacon frame based on the indication of the first indication information.

Optionally, after receiving the first indication information, the station determines the sending time of the second beacon frame by reading the first indication information, so that the station wakes up before the sending time of the second beacon frame, and receives the second beacon frame. For example, when the first indication information includes the quantity of beacon frame intervals between the first beacon frame and the second beacon frame, the station may learn of the sending time of the second beacon frame by multiplying the quantity of beacon frame intervals by a beacon frame interval (Beacon Interval) length. A method for determining a beacon frame interval length by the station is not limited in this example of this application. The station may learn of the beacon frame interval length by interacting with the access point, or the station may determine the beacon frame interval length based on a beacon frame interval length carried in the first beacon frame.

In this example of this application, the station first receives the first beacon frame, where the first indication information included in the first beacon frame is used to indicate the sending time of the second beacon frame including the TWT information element; and the station determines the sending time of the second beacon frame based on the indication of the first indication information, so that the station can receive, at an exact time, the second beacon frame including the TWT information element, thereby improving communication efficiency. Optionally, the method 100 further includes the following steps:
103. The station determines, based on an indication of the TWT information element in the second beacon frame, a target time at which the access point sends a trigger frame.
104. The station receives the trigger frame at the target time.
105. After receiving the trigger frame, the station sends uplink data to the access point.

For example, FIG. 4 shows a schematic diagram of a communication method according to an example of this application. As shown in FIG. 4, first indication information may be named as TWT beacon frame count information (TWT Beacon Count), and the TWT beacon count may be used to indicate a beacon frame interval between a current beacon frame and a next beacon frame that includes a TWT information element (a second beacon frame). For example, when waking up from a sleep state, the station receives a first beacon frame and learns that in the first beacon frame, TWT beacon count=3, the station may continue to be in a sleep state for three beacon frame intervals and then wake up to receive a next beacon frame including a TWT information element. For a beacon frame including a TWT information element, a TWT beacon count indicated by the beacon frame may be zero, and this indicates that the beacon frame includes a TWT information element; or a TWT beacon count included in the beacon frame may indicate a sending time of a next-but-one beacon frame including a TWT information element. This is not limited in this example of this application.

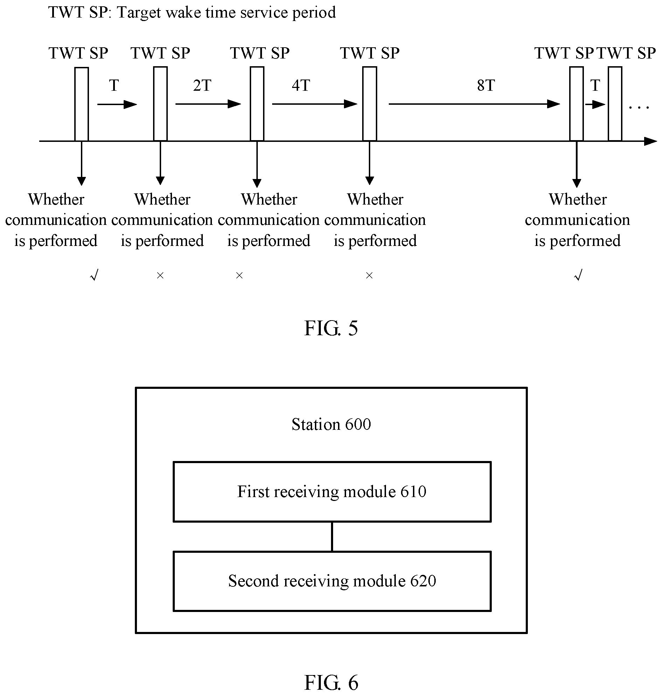

With reference to FIG. 1 to FIG. 4, the foregoing describes the communication method used in a broadcast TWT in the examples of this application. With reference to FIG. 5, the following describes a communication method used in a solicited TWT in an example of this application. In a solicited TWT in the prior art, a station requesting a TWT establishes, through one interaction, a TWT protocol with a station replying with a TWT. The station requesting a TWT and the station replying with a TWT keep in an active state within a TWT service period (SP) agreed in the TWT protocol, so as to send and receive data. In an implicit TWT of the solicited TWT, a TWT service period is cyclic, that is, the station requesting a TWT and the station replying with a TWT agree on a cycle a TWT service period in the TWT protocol, so that the TWT requesting STA and the TWT responding STA do not need to agree on a start time of each TWT service period before the TWT service period, but enter the TWT service period based on the cycle agreed in the TWT protocol. In the implicit TWT, because the TWT service period is cyclic, no matter whether needing to send and receive data, the station needs to enter an active or sleep state based on the cycle. This is disadvantageous for energy saving of the stations.

As described in the foregoing, in the implicit TWT of the solicited TWT, the TWT service period is cyclic. Regardless of whether the stations need to send and receive data, the stations need to enter an active state within the TWT service period based on the cycle of the TWT service period. This causes a waste of resources. In addition, a time interval between TWT service periods cannot be dynamically adjusted based on service intensity between the stations.

This example of this application provides the communication method used in an implicit TWT. A basic concept of the communication method is: After stations agree on a TWT protocol, a time interval between TWT service periods may be determined depending on whether the stations communicate with each other (or perform data exchange) within a TWT service period, and further an arrival time of a next TWT service period is determined. Whether communication is performed in the foregoing may be: whether a first station and a second station perform at least one successful data exchange. The successful data exchange may be: The first station sends a data frame/management frame to the second station, the second station sends an acknowledgment frame to the first station after successfully receiving the data frame/management frame, and the first station successfully receives the acknowledgment frame sent by the second station.

For ease of understanding, the following describes a communication method 300 used in a solicited TWT in an example of this application, and the method may be performed by a station or an access point. The method 300 includes the following steps:
301. A first station and a second station enter a first target wake time TWT service period, where the first station and the second station are in an active state within the first TWT service period.
302. The first station waits for a first time interval after the first TWT service period ends, to enter a second TWT service period, where a length of the first time interval is determined depending on whether the first station and the second station communicate with each other within the first TWT service period.

For example, when the first station and the second station communicate with each other within the first TWT service period, it may be determined that the first time interval has a relatively small value; or when the first station and the second station do not communicate with each other within a first TWT service period, it may be determined that the first time interval has a relatively large value.

In this example of this application, a length of a time interval before a next TWT service period is determined depending on whether the first station and the second station communicate with each other within the first TWT service period, so that a time interval between TWT service periods can be adjusted based on service intensity between the first station and the second station, thereby improving communication efficiency.

It should be understood that the first station and the second station may be an access point and a station, respectively, or both may be stations. In other words, the method in this example of this application may be performed based on a TWT created between a station and an access point, or may be performed based on a TWT created between stations.

For example, within a TWT service period, if stations do not communicate with each other, it indicates that current service traffic between the stations is relatively sparse, and a time interval between a current TWT service period and a next TWT service period may be increased. This is advantageous for energy saving of the stations. If the stations still do not communicate with each other within the next TWT service period, the time interval before the next TWT service period may be further increased. This time interval may be multiplied, or may be increased in another manner. This is not limited in this example of this application. Alternatively, if the stations communicate with each other within a TWT service period, it indicates that the stations may need to communicate with each other subsequently. In this case, the time interval before the next TWT service period may be reduced. The time interval may be halved, or may directly be preset to a minimum value. This is not limited in this example of this application. Therefore, the time interval between the TWT service periods can be adjusted based on service intensity between the stations, so as to reduce power consumption and ensure a relatively small communication delay, thereby improving communication efficiency.

FIG. 5 shows a schematic diagram of a communication method according to another example of this application. The communication method in FIG. 5 may be applied to an implicit TWT. The method in FIG. 5 may be performed based on a TWT created between a station and an access point. As shown in FIG. 5, a station and an access point may agree on a TWT protocol, and agree on a start time of a first TWT service period in the TWT protocol. When the station and the access point communicate with each other within the first TWT service period, and the station and the access point enter a second TWT service period after waiting for a time T. If the station and the access point do not communicate with each other within the second TWT service period, a time interval before a next TWT service period is greater than the time interval T after the first TWT service period, and is 2T. Similarly, the station and the access point do not communicate with each other within a third TWT service period and a fourth TWT service period, and therefore time intervals are 4T and 8T, respectively. Because the station and the access point communicate with each other within a fifth TWT service period, a next time interval is reduced to T.

For ease of understanding, the following describes specific steps of the communication method used in the implicit TWT in this example of this application. It should be understood that these steps or operations are merely an example, and another operation or variations of the following operations may also be performed in an example of this application. In addition, the following steps may be performed in a sequence different from that presented in the following, and possibly not all of the steps in the following need to be performed. As described in the following, the first station may be TWT requesting STA, and the second station may be TWT responding STA. The specific steps include the following:
401. A first station sends, to a second station, a request frame used to create a TWT, where the request frame includes TWT request information.
402. The second station sends a response frame to the first station, where the response frame includes TWT response information. Based on interaction implemented by performing steps 401 and 402, the first station and the second station establish a TWT protocol, and agree on a time of the first TWT service period.
403. Within a TWT service period, if the first station and the second station communicate with each other, a next TWT service period is started after a time T; or if the first station and the second station do not communicate with each other, a time interval before a next TWT service period has an agreed value that is greater than a value of an interval before the current TWT service period (for example, the time interval before the next TWT service period may be twice the interval before the current TWT service period).
404. The first station and the second station determine an arrival time of the next TWT service period according to the method in step 403, and keep in an active state at the arrival time of the next TWT service period.

Optionally, in step 403, a time interval between TWT service periods may be set to a maximum value, and when the time interval between the TWT service periods reaches the maximum value, even though the first station and the second station do not communicate with each other within the TWT service period, the interval between the TWT service periods does not increase any more but remains the maximum value. The maximum value may be specified according to a standard, or may be sent to each station by the access point in a broadcast mode by using a beacon frame. In addition, the maximum value may alternatively be determined by negotiation between the first station and the second station. For example, the maximum value may be carried in the TWT request frame in step 401 and/or the TWT response frame in step 402. In addition, during setting of an initial first TWT service period, a time interval between the first TWT service period and a second TWT service period may be set to a fixed value. For example, the time interval may be a minimum value of the interval between the TWT service periods.

Optionally, if the first station and the second station do not need to communicate with each other within a TWT service period, the first station and the second station may perform frame interaction to increase a time interval that is before a next service period. For example, the first station sends a request frame, and the request frame carries indication information used to increase the time interval that is before the next service period. The second station sends a response frame after receiving the request frame, and the response frame carries indication information used to indicate that the second station accepts or rejects a request of "increasing the time interval that is before the next service period".

Similarly, if the first station and the second station communicate with each other within a TWT service period, the first station and the second station may perform frame interaction to reduce a time interval that is before a next service period. For example, the first station sends a request frame, and the request frame carries indication information used to reduce the time interval that is before the next service period. The second station sends a response frame after receiving the request frame, and the response frame carries indication information used to indicate that the second station accepts or rejects a request of "reducing the time interval that is before the next service period".

With reference to FIG. 1 to FIG. 5, the foregoing describes the communication method used in a broadcast TWT and the communication method used in a solicited TWT in the examples of this application. The following describes a communication method used in a broadcast TWT in another example of this application.

In an existing broadcast TWT mechanism, an access point and a station may perform frame interaction to determine a sending time of a beacon frame including a TWT information element, that is, when needing to send data, the station may send, to the access point, a request frame used to request to create a TWT, and after receiving the request frame, the access point sends a response frame to the station. Indication information included in the response frame may instruct the station to monitor a target beacon frame including a TWT information element. The station receives the target beacon frame based on the instruction of the indication information, and sends uplink data based on the TWT information element included in the target beacon frame. However, in the prior art, when the access point needs to send downlink data to the station, before sending the downlink data, the access point first needs to determine that the station is in an active state. Usually, the access point determines, by receiving a power save poll (PS-Poll) frame sent by the station, that the station is in the active state. In other words, each time when waking up from a sleep state, the station sends a PS-Poll frame to the access point, to inform the access point that the station has been in an active state; in this case, the access point can send the downlink data to the station.

Based on the foregoing technologies, to improve communication efficiency, this example of this application provides the communication method used in a broadcast TWT. A basic concept of the method is: Because the access point and the station agree on, through interaction in advance, a time at which the station receives the target beacon frame, it may be considered that the station can read the TWT information element in the target beacon frame after receiving the target beacon frame, thereby obtaining a start time and duration of a TWT service period indicated by the TWT information element. In this case, the access point may further determine that the station keeps in an active state (or keeps monitoring a channel) within the TWT service period. Therefore, in this example of this application, because the access point has determined that the station wakes up within the TWT service period, after waking up within the TWT service period, the station may do not need to send a PS-Poll frame to the access point, and the access point may directly send a downlink data frame to the station without receiving the PS-Poll frame, thereby improving communication efficiency. The following describes a communication method 500 used in a broadcast TWT in an example of this application, the method is performed by a station and an access point, and the method 500 includes the following steps:
501. A station sends a request frame to an access point, where the request frame is used to request to create a target wake time TWT.
502. After receiving the request frame, the access point sends a response frame to the station, where the response frame is used to instruct the station to monitor a target beacon frame, and the target beacon frame is a beacon frame including a TWT information element, so that the station enters a TWT service period based on the TWT information element.
503. Within the TWT service period, the access point directly sends downlink data to the station without receiving a power save poll PS-Poll frame sent by the station.

In this example of this application, after the station and the access point determine the target TWT service period through interaction, the access point may directly send the downlink data to the station within the TWT service period without receiving the PS-Poll frame sent by the station, thereby improving communication efficiency.

Optionally, the response frame sent by the access point may carry first indication information, and the first indication information may be used to indicate whether the station needs to send a PS-Poll frame to the access point. When the first indication information indicates that the station does not need to send the PS-Poll frame to the access point, the access point directly sends the downlink data to the station. Alternatively, the request frame sent by the station may carry second indication information, and the second indication information is used to indicate whether the access point needs to send the downlink data to the station after receiving the PS-Poll frame.

With reference to FIG. 1 to FIG. 5, the foregoing describes in detail the communication method used in a wireless local area network in the examples of this application. With reference to FIG. 6 to FIG. 15, the following describes a station and an access point used in a wireless local area network in the examples of this application.

FIG. 6 is a schematic diagram of a station 600 for data transmission according to an example of this application. It should be understood that the station 600 in FIG. 6 can implement the steps performed by the station in the foregoing. For brevity, repeated descriptions are omitted as appropriate. The station 600 includes:
a first receiving module 610, configured to receive a first beacon frame sent by an access point, where the first beacon frame includes first indication information, the first indication information is used to indicate a sending time of a second beacon frame, and the second beacon frame is a beacon frame including a target wake time TWT information element; and
a second receiving module 620, configured to receive the second beacon frame based on the indication of the first indication information.

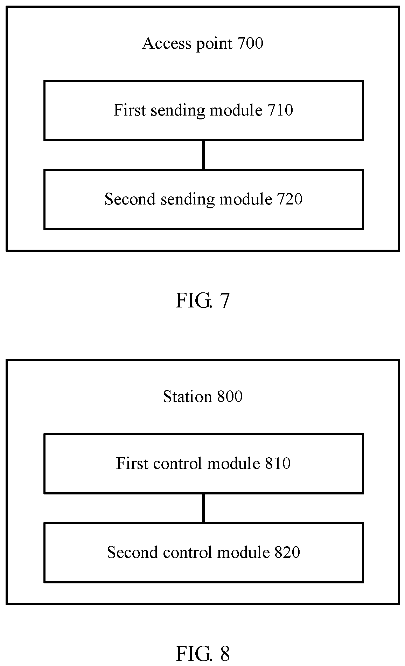

In this example of this application, the station first receives the first beacon frame, where the first indication information included in the first beacon frame is used to indicate the sending time of the second beacon frame including the TWT information element; and the station determines the sending time of the second beacon frame based on the indication of the first indication information, so that the station can receive, at an exact time, the second beacon frame including the TWT information element, thereby improving communication efficiency. FIG. 7 is a schematic diagram of an access point 700 for data transmission according to an example of this application. It should be understood that the access point 700 in FIG 7 can implement the steps performed by the access point in the foregoing. For brevity, repeated descriptions are omitted as appropriate. The access point 700 includes:
a first sending module 710, configured to send a first beacon frame, where the first beacon frame includes first indication information, the first indication information is used to indicate a sending time of a second beacon frame, and the second beacon frame is a beacon frame including a target wake time TWT information element; and
a second sending module 720, configured to send the second beacon frame.

In this example of this application, the access point first sends the first beacon frame, where the first indication information included in the first beacon frame is used to indicate the sending time of the second beacon frame including the TWT information element, so that the station determines the sending time of the second beacon frame based on the indication of the first indication information. In this way, the station can receive, at an exact time, the second beacon frame including the TWT information element, thereby improving communication efficiency.

FIG. 8 is a schematic diagram of a station 800 for data transmission according to an example of this application. It should be understood that the station 800 in FIG. 8 can implement the steps performed by the station in the foregoing. For brevity, repeated descriptions are omitted as appropriate. The station 800 is a first station, including:
a first control module 810, configured to control the first station to enter a first target wake time TWT service period, where the first station and a second station are in an active state within the first TWT service period; and
a second control module 820, configured to control, after the first TWT service period ends, the first station to wait for a first time interval to enter a second TWT service period, where a length of the first time interval is determined depending on whether the first station and the second station communicate with each other within the first TWT service period.

In this example of this application, a length of a time interval before a next TWT service period is determined depending on whether the first station and the second station communicate with each other within the first TWT service period, so that a time interval between TWT service periods can be adjusted based on service intensity between the first station and the second station, thereby improving communication efficiency.

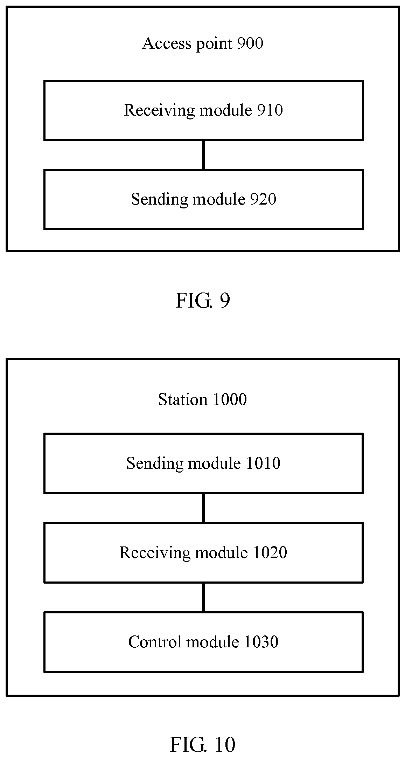

FIG. 9 is a schematic diagram of an access point 900 for data transmission according to an example of this application. It should be understood that the access point 900 in FIG. 9 can implement the steps performed by the access point in the foregoing. For brevity, repeated descriptions are omitted as appropriate. The access point 900 includes:
a receiving module 910, configured to receive a request frame from a station, where the request frame is used to request to create a target wake time TWT; and a sending module 920, configured to send a response frame to the station, where the response frame is used to instruct the station to monitor a target beacon frame, and the target beacon frame is a beacon frame including a TWT information element, so that the station enters a TWT service period based on the TWT information element, where
the sending module 920 is further configured to directly send downlink data to the station within the TWT service period without receiving a power save poll PS-Poll frame sent by the station.

In this example of this application, after the station and the access point determine the target TWT service period through interaction, the access point may directly send the downlink data to the station within the TWT service period without receiving the PS-Poll frame sent by the station, thereby improving communication efficiency.

FIG. 10 is a schematic diagram of a station 1000 for data transmission according to an example of this application. It should be understood that the station 1000 in FIG. 10 can implement the steps performed by the station in the foregoing. For brevity, repeated descriptions are omitted as appropriate. The station 1000 includes:
a sending module 1010, configured to send a request frame to an access point, where the request frame is used to request to create a target wake time TWT;
a receiving module 1020, configured to receive a response frame from the access point, where the response frame is used to instruct the station 1000 to monitor a target beacon frame, and the target beacon frame is a beacon frame including a TWT information element; and
a control module 1030, configured to control the station 1000 to enter a TWT service period based on the TWT information element, where
the receiving module 1020 is further configured to directly receive downlink data from the access point within the TWT service period without sending a power save poll PS-Poll frame to the access point.

In this example of this application, after the station and the access point determine the target TWT service period through interaction, the station may directly receive the downlink data from the access point within the TWT service period without sending the PS-Poll frame to the access point, thereby improving communication efficiency.

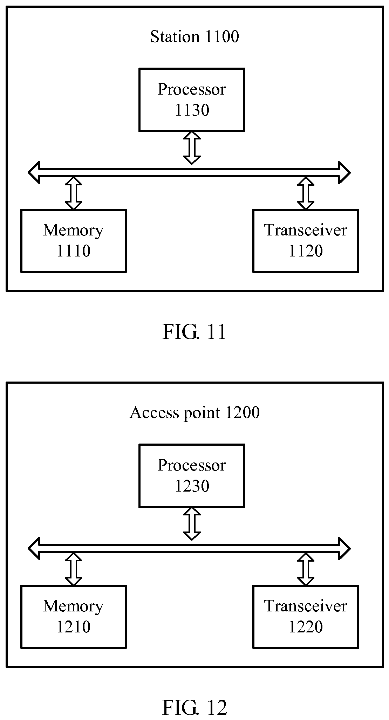

FIG. 11 is a schematic diagram of a station 1100 for data transmission according to an example of this application. It should be understood that the station 1100 in FIG. 11 can implement the steps performed by the station in the foregoing. For brevity, repeated descriptions are omitted as appropriate. The station 1100 includes:
a memory 1110, configured to store a program;
a transceiver 1120; and
a processor 1130, configured to execute the program in the memory 1110. When the program is executed, the processor 1130 is configured to: control the transceiver 1120 to receive a first beacon frame sent by an access point, where the first beacon frame includes first indication information, the first indication information is used to indicate a sending time of a second beacon frame, and the second beacon frame is a beacon frame including a target wake time TWT information element; and receive the second beacon frame based on the indication of the first indication information.

In this example of this application, the station first receives the first beacon frame, where the first indication information included in the first beacon frame is used to indicate the sending time of the second beacon frame including the TWT information element; and the station determines the sending time of the second beacon frame based on the indication of the first indication information, so that the station can receive, at an exact time, the second beacon frame including the TWT information element, thereby improving communication efficiency. FIG. 12 is a schematic diagram of an access point 1200 for data transmission according to an example of this application. It should be understood that the access point 1200 in FIG. 12 can implement the steps performed by the access point in the foregoing. For brevity, repeated descriptions are omitted as appropriate. The access point 1200 includes:
a memory 1210, configured to store a program;
a transceiver 1220; and
a processor 1230, configured to execute the program in the memory 1210. When the program is executed, the processor 1230 is configured to: control the transceiver 1220 to send a first beacon frame, where the first beacon frame includes first indication information, the first indication information is used to indicate a sending time of a second beacon frame, and the second beacon frame is a beacon frame including a target wake time TWT information element; and send the second beacon frame.

In this example of this application, the access point first sends the first beacon frame, where the first indication information included in the first beacon frame is used to indicate the sending time of the second beacon frame including the TWT information element, so that the station determines the sending time of the second beacon frame based on the indication of the first indication information. In this way, the station can receive, at an exact time, the second beacon frame including the TWT information element, thereby improving communication efficiency.

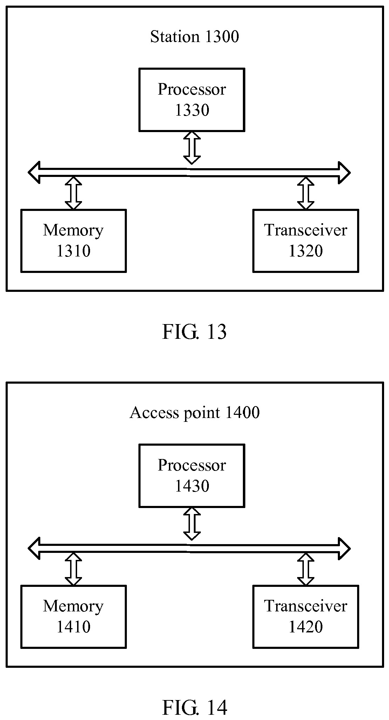

FIG 13 is a schematic diagram of a station 1300 for data transmission according to an example of this application. It should be understood that the station 1300 in FIG. 13 can implement the steps performed by the station in the foregoing. For brevity, repeated descriptions are omitted as appropriate. The station 1300 is a first station, including:
a memory 1310, configured to store a program.
a transceiver 1320; and
a processor 1330, configured to execute the program in the memory 1310. When the program is executed, the processor 1330 is configured to control the first station to enter a first target wake time TWT service period, where the first station and a second station are in an active state within the first TWT service period; and configured to control, after the first TWT service period ends, the first station to wait for a first time interval to enter a second TWT service period, where a length of the first time interval is determined depending on whether the first station and the second station communicate with each other within the first TWT service period.

In this example of this application, a length of a time interval before a next TWT service period is determined depending on whether the first station and the second station communicate with each other within the first TWT service period, so that a time interval between TWT service periods can be adjusted based on service intensity between the first station and the second station, thereby improving communication efficiency.

FIG. 14 is a schematic diagram of an access point 1400 for data transmission according to an example of this application. It should be understood that the access point 1400 in FIG. 14 can implement the steps performed by the access point in the foregoing. For brevity, repeated descriptions are omitted as appropriate. The access point 1400 includes:
a memory 1410, configured to store a program.
a transceiver 1420; and
a processor 1430, configured to execute the program stored in the memory 1410.

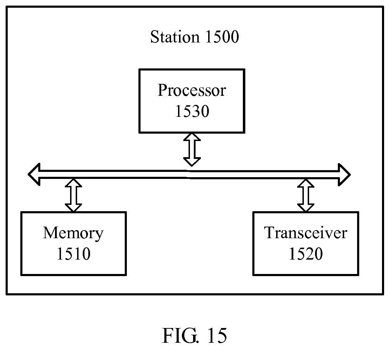

When the program is executed, the processor 1430 is configured to: control the transceiver 1420 to receive a request frame from the station, where the request frame is used to request to create a target wake time TWT; and to send a response frame to the station, where the response frame is used to instruct the station to monitor a target beacon frame, and the target beacon frame is a beacon frame including a TWT information element, so that the station enters a TWT service period based on the TWT information element; and configured to directly send downlink data to the station within the TWT service period without receiving a PS-Poll frame sent by the station. In this example of this application, after the station and the access point determine the target TWT service period through interaction, the access point may directly send the downlink data to the station within the TWT service period without receiving the PS-Poll frame sent by the station, thereby improving communication efficiency. FIG. 15 is a schematic diagram of a station 1500 for data transmission according to an example of this application. It should be understood that the station 1500 in FIG. 15 can implement the steps performed by the station in the foregoing. For brevity, repeated descriptions are omitted as appropriate. The station 1500 includes:
a transceiver 1520, configured to: send a request frame to an access point, where the request frame is used to request to create a target wake time TWT; and receive a response frame from the access point, where the response frame is used to instruct the station 1500 to monitor a target beacon frame, where the target beacon frame is a beacon frame including a TWT information element; and
a processor 1530, configured to execute a program stored in a memory 1510. When the program is executed, the processor 1530 controls the station 1500 to enter a TWT service period based on the TWT information element, where
the transceiver 1520 is further configured to directly receive downlink data from the access point within the TWT service period without sending a power save poll PS-Poll frame to the access point.

In this example of this application, after the station and the access point determine the target TWT service period through interaction, the station may directly receive the downlink data from the access point within the TWT service period without sending the PS-Poll frame to the access point, thereby improving communication efficiency.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the examples of this application, "B corresponding to A" indicates that B is associated with A, and B may be determined based on A. However, it should further be understood that determining B based on A does not mean that B is determined based on A only; that is, B may also be determined based on A and/or other information.

A person of ordinary skill in the art may be aware that, the units and steps in the examples described with reference to the examples disclosed herein may be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method examples, and details are not described herein.

In the several examples provided in this application, it should be understood that the disclosed system, apparatus, and method may be implemented in other manners. For example, the described apparatus example is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of the examples in this application.

In addition, functional units in the examples of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the examples of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

To make the application document brief and clear, the foregoing technical features and descriptions in an example may be understood as applicable to other examples, and are not described in other examples again.

The foregoing descriptions are merely specific examples of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method used in a wireless local area network, comprising:
receiving, by a station (600), a first beacon frame sent by an access point (700), wherein the first beacon frame comprises first indication information, the first indication information is used to indicate a sending time of a second beacon frame, and the second beacon frame is a beacon frame comprising a target wake time, TWT, information element; and
receiving, by the station (600), the second beacon frame based on the indication of the first indication information, wherein the first indication information comprises a quantity of beacon frame intervals between the first beacon frame and the second beacon frame.

2. The communication method according to claim 1, wherein the first beacon frame further comprises second indication information, and the second indication information is used to indicate a sending cycle of a beacon frame comprising a TWT information element.

3. The communication method according to any one of claims 1 to 2, wherein the method further comprises:
determining, by the station (600) based on an indication of the TWT information element in the second beacon frame, a target time at which the access point (700) sends a trigger frame; and
receiving, by the station (600), the trigger frame at the target time.

4. A communication method used in a wireless local area network, comprising:
sending, by an access point (700), a first beacon frame, wherein the first beacon frame comprises first indication information, the first indication information is used to indicate a sending time of a second beacon frame, and the second beacon frame is a beacon frame comprising a target wake time, TWT, information element; and
sending, by the access point (700), the second beacon frame, wherein the first indication information comprises a quantity of beacon frame intervals between the first beacon frame and the second beacon frame.

5. The communication method according to claim 4, wherein the first beacon frame further comprises second indication information, and the second indication information is used to indicate a sending cycle of a beacon frame comprising a TWT information element.

6. The communication method according to any one of claims 4 to 5, wherein the method further comprises:
sending, by the access point (700), a trigger frame at a target time indicated by the TWT information element.

7. A station (600), comprising:
a first receiving module (610), configured to receive a first beacon frame sent by an access point (700), wherein the first beacon frame comprises first indication information, the first indication information is used to indicate a sending time of a second beacon frame, and the second beacon frame is a beacon frame comprising a target wake time, TWT, information element; and
a second receiving module (620), configured to receive the second beacon frame based on the indication of the first indication information, wherein the first indication information comprises a quantity of beacon frame intervals between the first beacon frame and the second beacon frame.

8. The station according to claim 7, wherein the first beacon frame further comprises second indication information, and the second indication information is used to indicate a sending cycle of a beacon frame comprising a TWT information element.

9. The station according to any one of claims 7 to 8, wherein the station further comprises:
a determining module, configured to determine, based on an indication of the, TWT, information element in the second beacon frame, a target time at which the access point (700) sends a trigger frame; and
a receiving module, configured to receive the trigger frame at the target time.

10. An access point (700), comprising:
a first sending module (710), configured to send a first beacon frame, wherein the first beacon frame comprises first indication information, the first indication information is used to indicate a sending time of a second beacon frame, and the second beacon frame is a beacon frame comprising a target wake time, TWT, information element; and
a second sending module (720), configured to send the second beacon frame, wherein the first indication information comprises a quantity of beacon frame intervals between the first beacon frame and the second beacon frame.

11. The access point according to claim 10, wherein the first beacon frame further comprises second indication information, and the second indication information is used to indicate a sending cycle of a beacon frame comprising a TWT information element.

12. The access point according to any one of claims 10 to 11, further comprising:
a third sending module, configured to send a trigger frame at a target time indicated by the TWT information element.

13. A computer-readable medium on which a program is recorded, wherein the program, when executed, enables the computer to perform the method of any one of claims 1 to 3.

14. A computer-readable medium on which a program is recorded, wherein the program, when executed, enables the computer to perform the method of any one of claims 4 to 6.

## Patentansprüche

1. Kommunikationsverfahren, verwendet in einem drahtlosen lokalen Netzwerk, Folgendes umfassend:
Empfangen, durch eine Station (600), eines von einem Zugangspunkt (700) gesendeten ersten Beacon-Frames,
wobei der erste Beacon-Frame erste Anzeigeinformationen umfasst, die ersten Anzeigeinformationen verwendet werden, um eine Sendezeit eines zweiten Beacon-Frames anzugeben, und der zweite Beacon-Frame ein Beacon-Frame ist, der ein "Target Wake Time" (TWT)-Informationselement umfasst; und
Empfangen, durch die Station (600), des zweiten Beacon-Frames, basierend auf der Angabe der ersten Anzeigeinformationen,
wobei die ersten Anzeigeinformationen eine Menge von Beacon-Frame-Intervallen zwischen dem ersten Beacon-Frame und dem zweiten Beacon-Frame umfassen.

2. Kommunikationsverfahren gemäß Anspruch 1,
wobei der erste Beacon-Frame ferner zweite Anzeigeinformationen umfasst, und die zweiten Anzeigeinformationen verwendet werden, um einen Sendezyklus eines Beacon-Frames anzugeben, der ein TWT-Informationselement umfasst.

3. Kommunikationsverfahren gemäß einem der Ansprüche 1 bis 2,
wobei das Verfahren ferner Folgendes umfasst:
Bestimmen, durch die Station (600), basierend auf einer Angabe des TWT-Informationselements in dem zweiten Beacon-Frame, einer Sollzeit, zu welcher der Zugangspunkt (700) einen Trigger-Frame sendet; und
Empfangen, durch die Station (600), des Trigger-Frames zu der Sollzeit.

4. Kommunikationsverfahren, verwendet in einem drahtlosen lokalen Netzwerk, Folgendes umfassend:
Senden, durch einen Zugangspunkt (700), eines ersten Beacon-Frames,
wobei der erste Beacon-Frame erste Anzeigeinformationen umfasst, die ersten Anzeigeinformationen verwendet werden, um eine Sendezeit eines zweiten Beacon-Frames anzugeben, und der zweite Beacon-Frame ein Beacon-Frame ist, der ein "Target Wake Time" (TWT)-Informationselement umfasst; und
Senden, durch den Zugangspunkt (700), des zweiten Beacon-Frames,
wobei die ersten Anzeigeinformationen eine Menge von Beacon-Frame-Intervallen zwischen dem ersten Beacon-Frame und dem zweiten Beacon-Frame umfassen.

5. Kommunikationsverfahren gemäß Anspruch 4,
wobei der erste Beacon-Frame ferner zweite Anzeigeinformationen umfasst, und die zweiten Anzeigeinformationen verwendet werden, um einen Sendezyklus eines Beacon-Frames anzugeben, der ein TWT-Informationselement umfasst.

6. Kommunikationsverfahren gemäß einem der Ansprüche 4 bis 5,
wobei das Verfahren ferner Folgendes umfasst:
Senden, durch den Zugangspunkt (700), eines Trigger-Frames zu einer Sollzeit, die durch das TWT-Informationselement angegeben wird.

7. Station (600), Folgendes umfassend:
ein erstes Empfangsmodul (610), das dazu ausgelegt ist, einen von einem Zugangspunkt (700) gesendeten ersten Beacon-Frame zu empfangen,
wobei der erste Beacon-Frame erste Anzeigeinformationen umfasst, die ersten Anzeigeinformationen verwendet werden, um eine Sendezeit eines zweiten Beacon-Frames anzugeben, und der zweite Beacon-Frame ein Beacon-Frame ist, der ein "Target Wake Time" (TWT)-Informationselement umfasst; und
ein zweites Empfangsmodul (620), das dazu ausgelegt ist, den zweiten Beacon-Frame, basierend auf der Angabe der ersten Anzeigeinformationen, zu empfangen, wobei die ersten Anzeigeinformationen eine Menge von Beacon-Frame-Intervallen zwischen dem ersten Beacon-Frame und dem zweiten Beacon-Frame umfassen.

8. Station gemäß Anspruch 7,
wobei der erste Beacon-Frame ferner zweite Anzeigeinformationen umfasst, und die zweiten Anzeigeinformationen verwendet werden, um einen Sendezyklus eines Beacon-Frames anzugeben, der ein TWT-Informationselement umfasst.

9. Station gemäß einem der Ansprüche 7 bis 8,
wobei die Station ferner Folgendes umfasst:
ein Bestimmungsmodul, das dazu ausgelegt ist, basierend auf einer Angabe des TWT-Informationselements in dem zweiten Beacon-Frame, eine Sollzeit zu bestimmen, zu welcher der Zugangspunkt (700) einen Trigger-Frame sendet; und
ein Empfangsmodul, das dazu ausgelegt ist, den Trigger-Frame zu der Sollzeit zu empfangen.

10. Zugangspunkt (700), Folgendes umfassend:
ein erstes Sendemodul (710), das dazu ausgelegt ist, einen ersten Beacon-Frame zu senden,
wobei der erste Beacon-Frame erste Anzeigeinformationen umfasst, die ersten Anzeigeinformationen verwendet werden, um eine Sendezeit eines zweiten Beacon-Frames anzugeben, und der zweite Beacon-Frame ein Beacon-Frame ist, der ein "Target Wake Time" (TWT)-Informationselement umfasst; und
ein zweites Sendemodul (720), das dazu ausgelegt ist, den zweiten Beacon-Frame zu senden,
wobei die ersten Anzeigeinformationen eine Menge von Beacon-Frame-Intervallen zwischen dem ersten Beacon-Frame und dem zweiten Beacon-Frame umfassen.

11. Zugangspunkt gemäß Anspruch 10,
wobei der erste Beacon-Frame ferner zweite Anzeigeinformationen umfasst, und die zweiten Anzeigeinformationen verwendet werden, um einen Sendezyklus eines Beacon-Frames anzugeben, der ein TWT-Informationselement umfasst.

12. Zugangspunkt gemäß einem der Ansprüche 10 bis 11, ferner Folgendes umfassend:
ein drittes Sendemodul, das dazu ausgelegt ist, einen Trigger-Frame zu einer Sollzeit zu senden, die durch das TWT-Informationselement angegeben wird.

13. Computerlesbares Medium, auf dem ein Programm aufgezeichnet ist,
wobei das Programm, wenn es ausgeführt wird, den Computer befähigt, das Verfahren nach einem der Ansprüche 1 bis 3 durchzuführen.

14. Computerlesbares Medium, auf dem ein Programm aufgezeichnet ist,
wobei das Programm, wenn es ausgeführt wird, den Computer befähigt, das Verfahren nach einem der Ansprüche 4 bis 6 durchzuführen.

## Revendications

1. Procédé de communication utilisé dans un réseau local sans fil, comprenant :
la réception, par une station (600), d'une première trame de balise envoyée par un point d'accès (700), la première trame de balise comprenant des premières informations d'indications, les premières informations d'indications étant utilisées pour indiquer un moment d'envoi d'une seconde trame de balise, et la seconde trame de balise étant une trame de balise comprenant un élément d'informations d'un temps de réveil cible, TWT ; et
la réception, par la station (600), de la seconde trame de balise sur la base de l'indication des premières informations d'indications, les premières informations d'indications comprenant une quantité d'intervalles de trame de balise entre la première trame de balise et la seconde trame de balise.

2. Procédé de communication selon la revendication 1, dans lequel la première trame de balise comprend en outre des secondes informations d'indications, et les secondes informations d'indications sont utilisées pour indiquer un cycle d'envoi d'une trame de balise comprenant un élément d'informations TWT.

3. Procédé de communication selon l'une quelconque des revendications 1 et 2, le procédé comprenant en outre :
la détermination, par la station (600) sur la base d'une indication de l'élément d'informations TWT dans la seconde trame de balise, d'un moment cible auquel le point d'accès (700) envoie une trame de déclenchement ; et
la réception, par la station (600), de la trame de déclenchement au moment cible.

4. Procédé de communication utilisé dans un réseau local sans fil, comprenant :
l'envoi, par un point d'accès (700), d'une première trame de balise, la première trame de balise comprenant des premières informations d'indications, les premières informations d'indications étant utilisées pour indiquer un moment d'envoi d'une seconde trame de balise, et la seconde trame de balise étant une trame de balise comprenant un élément d'informations d'un temps de réveil cible, TWT ; et
l'envoi, par le point d'accès (700), de la seconde trame de balise, les premières informations d'indications comprenant une quantité d'intervalles de trame de balise entre la première trame de balise et la seconde trame de balise.

5. Procédé de communication selon la revendication 4, dans lequel la première trame de balise comprend en outre des secondes informations d'indications, et les secondes informations d'indications sont utilisées pour indiquer un cycle d'envoi d'une trame de balise comprenant un élément d'informations TWT.

6. Procédé de communication selon l'une quelconque des revendications 4 et 5, le procédé comprenant en outre :
l'envoi, par le point d'accès (700), d'une trame de déclenchement à un moment cible indiqué par l'élément d'informations TWT.

7. Station (600), comprenant :
un premier module de réception (610), conçu pour recevoir une première trame de balise envoyée par un point d'accès (700), la première trame de balise comprenant des premières informations d'indications, les premières informations d'indications étant utilisées pour indiquer un moment d'envoi d'une seconde trame de balise, et la seconde trame de balise étant une trame de balise comprenant un élément d'informations d'un temps de réveil cible, TWT ; et
un second module de réception (620), conçu pour recevoir la seconde trame de balise sur la base de l'indication des premières informations d'indications, les premières informations d'indications comprenant une quantité d'intervalles de trame de balise entre la première trame de balise et la seconde trame de balise.

8. Station selon la revendication 7, dans laquelle la première trame de balise comprend en outre des secondes informations d'indications, et les secondes informations d'indications sont utilisées pour indiquer un cycle d'envoi d'une trame de balise comprenant un élément d'informations TWT.

9. Station selon l'une quelconque des revendications 7 et 8, la station comprenant en outre :
un module de détermination, conçu pour déterminer, sur la base d'une indication de l'élément d'informations TWT dans la seconde trame de balise, un moment cible auquel le point d'accès (700) envoie une trame de déclenchement ; et
un module de réception, conçu pour recevoir la trame de déclenchement au moment cible.

10. Point d'accès (700), comprenant :
un premier module d'envoi (710), conçu pour envoyer une première trame de balise, la première trame de balise comprenant des premières informations d'indications, les premières informations d'indications étant utilisées pour indiquer un moment d'envoi d'une seconde trame de balise, et la seconde trame de balise étant une trame de balise comprenant un élément d'informations d'un temps de réveil cible, TWT ; et
un deuxième module d'envoi (720), conçu pour envoyer la seconde trame de balise, les premières informations d'indications comprenant une quantité d'intervalles de trame de balise entre la première trame de balise et la seconde trame de balise.

11. Point d'accès selon la revendication 10, dans lequel la première trame de balise comprend en outre des secondes informations d'indications, et les secondes informations d'indications sont utilisées pour indiquer un cycle d'envoi d'une trame de balise comprenant un élément d'informations TWT.

12. Point d'accès selon l'une quelconque des revendications 10 et 11, comprenant en outre :
un troisième module d'envoi, configuré pour envoyer une trame de déclenchement à un moment cible indiqué par l'élément d'informations TWT.

13. Support lisible par ordinateur sur lequel un programme est enregistré, dans lequel le programme, lorsqu'il est exécuté, permet à l'ordinateur de mettre en oeuvre le procédé selon l'une quelconque des revendications 1 à 3.

14. Support lisible par ordinateur sur lequel un programme est enregistré, dans lequel le programme, lorsqu'il est exécuté, permet à l'ordinateur de mettre en oeuvre le procédé selon l'une quelconque des revendications 4 à 6.
